Europäisches Patentamt

European Patent Office

Office européen des brevets

(19)

(11) Veröffentlichungsnummer: **0 065 596**
**B1**

(12) **EUROPÄISCHE PATENTSCHRIFT**

(45) Veröffentlichungstag der Patentschrift:
26.02.86

(51) Int. Cl.⁴: **H 04 L 25/49**

(21) Anmeldenummer: **81109272.5**

(22) Anmeldetag: **29.10.81**

(54) Signaldecoder.

(30) Priorität: 21.05.81 DE 3120282

(43) Veröffentlichungstag der Anmeldung:
01.12.82 Patentblatt 82/48

(45) Bekanntmachung des Hinweises auf die Patenterteilung:
26.02.86 Patentblatt 86/9

(84) Benannte Vertragsstaaten:
BE CH DE FR GB IT LI NL SE

(56) Entgegenhaltungen:
FR - A - 2 407 617
US - A - 3 745 361
US - A - 3 787 613

(73) Patentinhaber: Siemens Aktiengesellschaft, Berlin und
München Wittelsbacherplatz 2, D-8000 München 2 (DE)

(72) Erfinder: Bechtner, Rüdiger, Ing. grad.,
Hindelangstrasse 6, D-8000 München 71 (DE)

## Beschreibung

Die Erfindung bezieht sich auf einen Signaldecoder zur Umsetzung eines codirektionalen, in eine positive und eine negative Halbwelle geteilten und verstärkten 64-kbit/s-Schnittstellensignals in ein binäres Informationssignal, in einen 64-kHz-Takt und in einen 8-kHz-Takt.

Derartige Schnittstellensignale sind im CCITT Orange-Book, Vol. III-2, Line Transmission, 1977, Seiten 432-433, G. 732 oder Seite 458-459, G.744, definiert.

## Beschreibungseinfügung

(schließ sich auf Seite 1 an die Zeile 13 an und ersetzt Zeilen 14 und 15)

Im CCITT-Yellow-Book, Volume III, Fascicle III 3, DIGITAL NETWORKS - TRANSMISSION SYSTEMS AND MULTIPLEXING EQUIPMENT, Genf, 1981, Seiten 36 bis 37, finden sich diese Schnittstellensignale in der Empfehlung G.703.

Aus der FR-A-2 407 617 ist bereits ein derartiger Signaldecoder bekannt. Dieser arbeitet mit einer monostabilen Kippstufe, deren analoge Kippzeit infolge von bauelementetoleranzen und Temperatureinflüssen stark schwankt. Dies hat eine urzureichende Jitterverträglichkeit zur Folge, da der gewonnene Takt bei nicht zeitrichtiger Abfrage Bit-Fehler hervorrufen kann.

Der Erfindung liegt die Aufgabe zugrunde, einen Signaldecoder mit besserer Jitterverträglichkeit zu realisieren.

Ausgehend von einem Signaldecoder der einleitend geschilderten Art wird diese Aufgabe erfindungsgemäß dadurch gelöst, daß für jede Halbwelle ein erster Speicher vorgesehen ist, dessen Eingang über einen ersten Schalter mit dem Eingang für die Halbwelle verbunden ist, daß für jede Halbwelle ein zweiter Speicher vorgesehen ist, dessen Eingang mit dem Ausgang eines zweiten Schalters verbunden ist, dessen Steuereingang wiederum mit dem Ausgang eines steuerbaren Inverters verbunden ist, dessen Eingang außerdem mit dem Eingang für die Halbwelle und dessen Steuereingang mit dem Ausgang des ersten Speichers verbunden ist, daß für jede Halbwelle ein dritter Speicher vorgesehen ist, dessen Eingang mit dem Ausgang eines dritten schalters verbunden ist, dessen Steuereingang wiederum mit dem Eingang für die Halbwelle verbunden ist, daß für jede Halbwelle, ein Zähler vorgesehen ist, dessen Starteingang mit dem Eingang für die erste Halbwelle verbunden ist, dessen Stoppeingang mit dem Eingang für die zweite Halbwelle verbunden ist, dessen erster Befehlsausgang mit dem Steuereingang des ersten Schalters verbunden ist, dessen zweiter Befehlsausgang mit dem Eingang des zweiten Schalters und dessen dritter Befehlsausgang mit dem Eingang des dritten Schalters verbunden ist, daß ein erstes ODER-Gatter vorgesehen ist, dessen Eingänge mit jeweils einem Ausgang der ersten Speicher verbunden sind und dessen Ausgang das Informationssignal abgibt, daß ein zweites ODER-Gatter vorgesehen ist, dessen Eingänge mit jeweils einen Ausgang der zweiten Speicher verbunden sind und dessen Ausgang den 64-kHz-Takt abgibt, und daß ein drittes ODER-Gatter vorgesehen ist, dessen Eingänge mit jeweils einem Ausgang der dritten Speicher verbunden sind und dessen Ausgang den 8-kHz-Takt abgibt.

Bei dieser Lösung wird das decodierte Signal ausschließ-lich aus den Flanken des Eingangssignals abgeleitet.

Für eine Decodierung eines Schnittstellensignals nach CCITT G.732 ist es vorteilhaft, wenn dreistufige binäre interne Zähler vorgesehen sind, deren Stufenausgänge mit den Befehlsausgängen der Zähler verbunden sind, und wenn Teiler 8:1 vorgesehen sind, an deren Eingängen der Systemtakt 2048 kHz angeschlossen ist und deren invertierte Ausgänge mit den Takteingängen der internen Zähler verbunden sind.

Dabei ist es vorteilhaft, wenn die Schließungsphase des ersten Schalters bei 3/8, die Schließungsphase des zweiten Schalters bei 1/2 und die Schließungsphase des dritten Schalters bei ≧ 1 der Dauer der Codewörter für die Zustände Null und Eins liegen.

Für die Decodierung eines Schnittstellensignals nach CCITT G.744 ist es vorteilhaft, wenn dreistufige binäre Zähler vorgesehen sind, deren Stufenausgänge mit den Befehlsausgängen der Zähler verbunden sind, und wenn Teiler vorgesehen sind, an deren Eingängen der Systemtakt 8448 kHz angeschlossen ist und deren invertierte Ausgänge mit den Takteingängen der internen Zähler verbunden sind.

Der erfindungsgemäße Signaldecoder ist in vorteilhafter Weise in den Dateneingängen des Systems PCM 30 F, einer PCM-Vermittlung oder eines 64-kbit/s-Endgerätes verwendbar.

Anhand von Ausführungsbeispielen wird die Erfindung nachstehend näher erläutert.

Fig. 1 zeigt ein Schnittstellensignal nach CCITT G.732,

Fig. 2 zeigt einen erfindungsgemäßen Signaldecoder,

Fig. 3 zeigt eine praktische Ausführung des erfindungsgemäßen Signaldecoders und

Fig. 4 zeigt einen Pulsplan zum Signaldecoder nach Fig. 3.

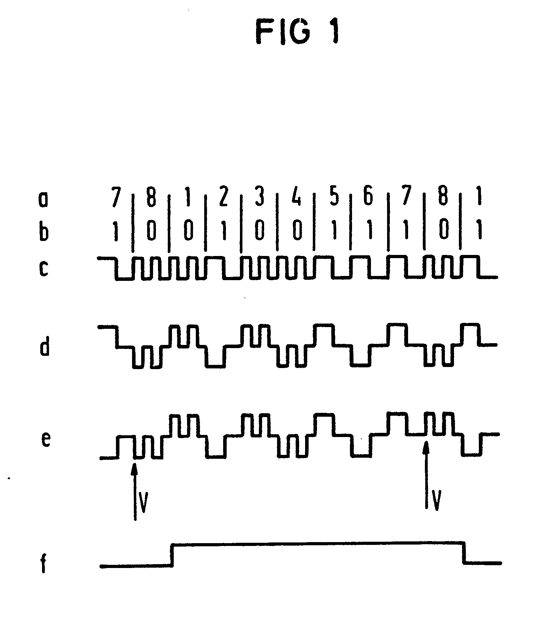

Fig. 1 zeigt die Stufen zur Bildung des codirektionalen Schnittstellensignales. Die Zeile a zeigt die Bit-Nummer, die Zeile b zeigt die Zustände des 64-kbit/s-Si-gnals und die Zeile c zeigt ein Signal, in dem der Zustand Null durch ein Codewort "1010" und der Zustand Eins durch ein Codewort "1100" gebildet wird. Die Zeile d zeigt weiter ein Signal, bei dem diese Codewörter alternierend umgepolt werden. Zeile e zeigt dieses Signal, in dem jedes achte Codewort die Umkehrregel verletzt. Diese Stellen sind durch V gekennzeichnet. Zeile f zeigt schließlich ein 8-kHz-Signal.

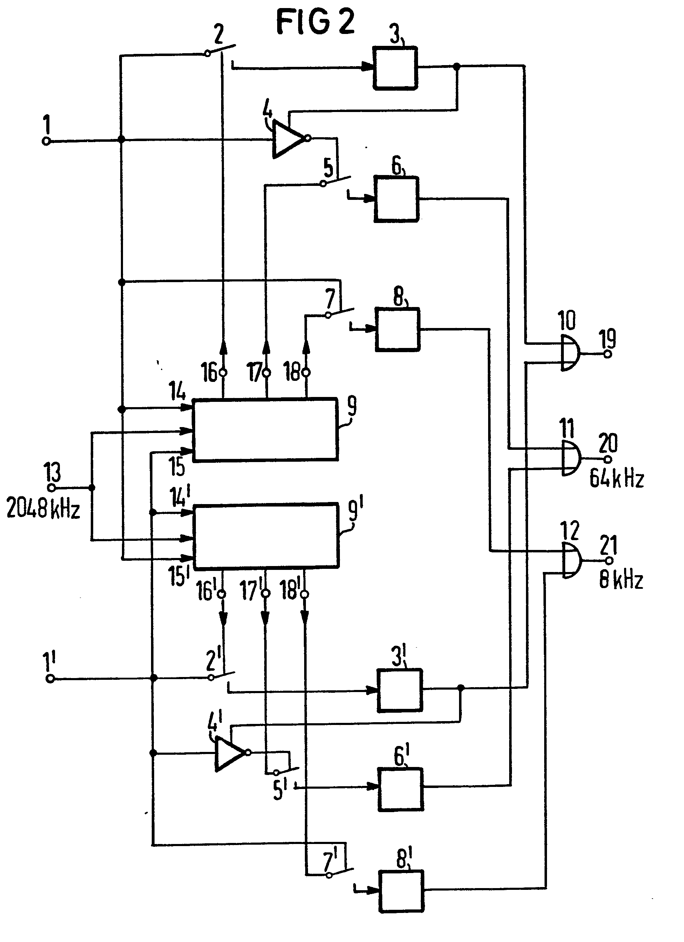

Fig. 2 zeigt einen erfindungsgemäßen Signaldecoder. Die Anordnung enthält für eine Halbwelle einen Eingang 1, Schalter 2, 5 und 7, einen steuerbaren Inverter 4, Speicher 3, 6 und 8 sowie einen Zähler 9. Eine entsprechende Anordnung für die andere Halbwelle ist mit denselben Bezugszeichen aber mit einem Apostroph gekennzeichnet. Die Ausgänge der Speicher sind durch ODER-Gatter 10, 11 und 12 zusammengefaßt.

Die Zähler 9 und 9' weisen einen Starteingang 14, 14', einen Stoppeingang 15, 15', einen ersten Befehlsausgang 16, 16', einen zweiten Befehlsausgang 17, 17', einen dritten Befehlsausgang 18, 18' und einen Takteingang 13 auf.

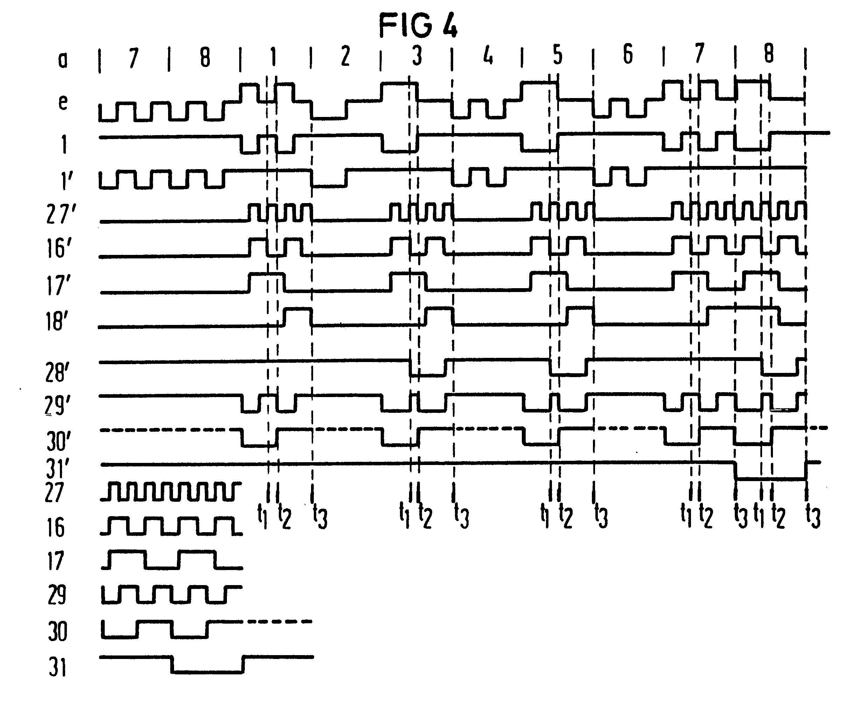

Die Wirkungsweise des Signaldecoders nach Fig. 2 wird unter zuhilfenahme des Pulsplanes nach Fig. 4 näher erhläutert. An den Eingang 1 wird eine Halbwelle angelegt. Der Schalter 2 schließt gesteuert vom Signal am Befehlsausgang 16 zu den Zeitpunkten $t_1$. Der in diesem Moment in der Halbwelle bestehende Zustand wird im Speicher 3 festgehalten. Am Befehlsausgang 17 liegt der Zustand vom Ausgang einer zweiten Stufe des Zählers 9 an. Dieser wird über den Schalter 5 zum Zeitpunkt $t_2$ an den Speicher 6 gegeben. Dieser Schalter 5 wird mit dem Signal am Eingang 1 geschlossen, wobei der Zustand am Ausgang des Speichers 3 gewährleistet, daß nur Signalflanken einer Art am Ausgang des gesteuerten Inverters 4 wirksam werden. Der Zustand am Befehlsausgang 18, der aus Figur 4 ersichtlich ist, wird über den Schalter 7 zum Zeitpunkt $t_3$ auf den Speicher 8 immer dann gegeben, wenn am Eingang 1 Signalflanken einer Art auftreten. Der beschriebene Vorgang läuft in gleicher Weise in der zweiten Hälfte der Schaltung ab, wenn an den Eingang 1' die andere Halbwelle angelegt wird.

Ein alternierendes Arbeiten beider Anordnungshälften wird durch die Start/Stopp-Signale an den Eingängen 14 und 15 bzw. 14' und 15' bewirkt. An den ODER-Gattern 10, 11, 12 werden die Signale der korrespondierenden Speicher 3 und 3', 6 und 6', 8 und 8' zusammengefaßt. Am Ausgang 19 erscheint das decodierte Informationssignal, am Ausgang 20 tritt ein 64-kHz-Takt und am Ausgang 21 ein 8-kHz-Takt auf.

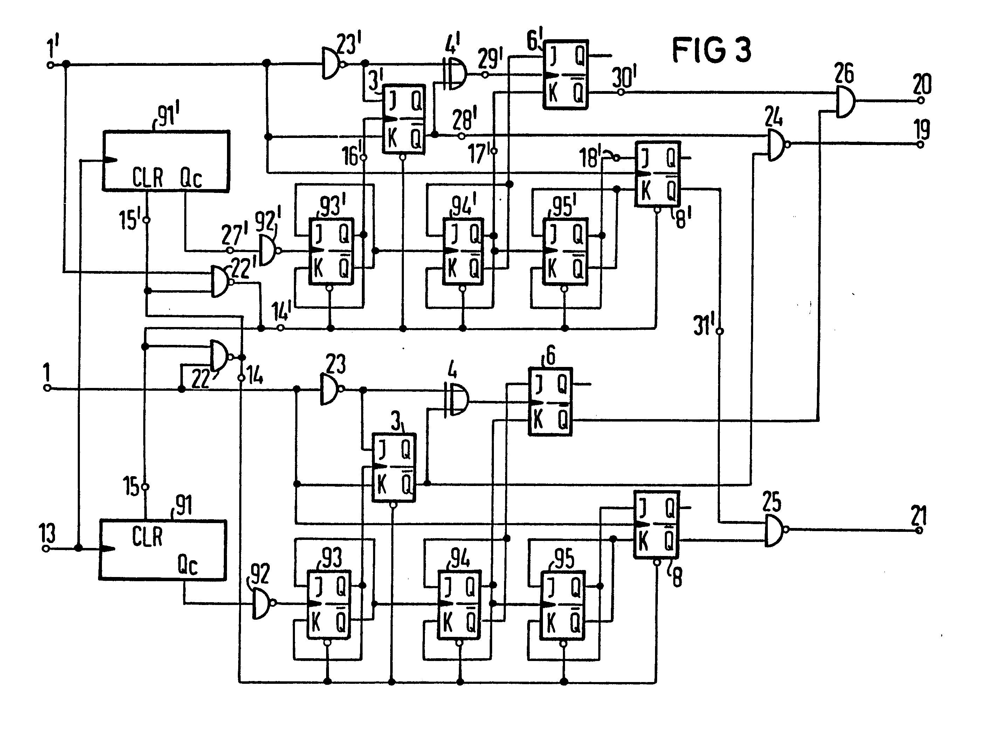

Fig. 3 zeigt eine praktische Ausführung des Signaldecoders nach Fig. 2. Der Zähler 9 besteht aus einem Teiler (8:1) 91, einem Inverter 92 und drei Stufen 93, 94 und 95 eines internen Zählers. Der RS-Speicher 22, 22' bildet die Start/Stopp-Befehle für beide Zähler 9, 9'. Die Verknüpfung der Speicherausgänge erfolgt durch die Gatter 24, 25 und 26, die eine ODER-Funktion ausüben.

Die Wirkungsweise des Signaldecoders nach Fig. 3 läßt sich mit Hilfe des Pulsplans in Fig. 4 anhand der aufgeführten Schaltungspunkte verfolgen.

**Patentansprüche**

1. Signaldecoder zur Umsetzung eines codirektionalen, in eine positive und eine negative Halbwelle geteilten und verstärkten 64-kbit/s-Schnittstellensignals in ein binäres Informationssignal, in einen 64-kHz-Takt und in einen 8-kHz-Takt,
dadurch gekennzeichnet,
daß für jede Halbwelle ein erster Speicher (3,3') vorgesehen ist, dessen Eingang über einen ersten Schalter (2,2') mit dem Eingang (1,1') für die Halbwelle verbunden ist,
daß für jede Halbwelle ein zweiter Speicher (6,6') vorgesehen ist, dessen Eingang mit dem Ausgang eines zweiten Schalters (5,5') verbunden ist, dessen Steuereingang wiederum mit dem Ausgang eines steuerbaren Inverters (4,4') verbunden ist, dessen Eingang außerdem mit dem Eingang für die Halbwelle (1,1') und dessen Steuereingang mit dem Ausgang des ersten Speichers (3,3') verbunden ist,
daß für jede Halbwelle ein dritter Speicher (8,8') vorgesehen ist, dessen Eingang mit dem Ausgang eines dritten Schalters (7,7') verbunden ist, dessen Steuereingang wiederum mit dem Eingang (1,1') für die Halbwelle verbunden ist,
daß für jede Halbwelle ein Zähler (9,9') vorgesehen ist, dessen Starteingang mit dem Eingang (1,1') für die erste Halbwelle verbunden ist, dessen Stoppeingang mit dem Eingang (1,1') für die zweite Halbwelle verbunden ist, dessen erster Befehlsausgang mit dem Steuereingang des ersten Schalterss (3,3'), dessen zweiter Befehlsausgang mit dem Eingang des zweiten Schalters (6,6') und dessen dritter Befehlsausgang mit dem Eingang des dritten Schalters (7,7') verbunden ist, daß ein erstes ODER-Gatter (10) vorgesehen ist, dessen Eingänge mit jeweils einem Ausgang der ersten Speicher (3,3') verbunden sind und dessen Ausgang das Informationssignal abgibt,
daß ein zweites ODER-Gatter (11) vorgesehen ist, dessen Eingänge mit jeweils einem Ausgang der zweiten Speicher (6,6') verbunden sind und dessen Ausgang den 64-kHz-Takt abgibt, und
daß ein drittes ODER-Gatter (12) vorgesehen ist, dessen Eingänge mit jeweils einem Ausgang der dritten Speicher (8,8') verbunden sind und dessen Ausgang den 8-kHz-Takt abgibt.

2. Signaldecoder für ein Schnittstellensignal (nach CCITT G.732) nach Anspruch 1,
dadurch gekennzeichnet,
daß dreistufige binäre interne Zähler (93, 93', 94, 94', 95, 95') vorgesehen sind, deren Stufenausgänge mit den Befehlsausgängen (16, 16', 17, 17', 18, 18') der Zähler (9, 9') verbunden sind und
daß Teiler 8:1 (91, 91') vorgesehen sind, an deren Eingängen der Systemtakt 2045 kHz angeschlossen ist und deren invertierte Ausgänge mit den Takteingängen der internen Zähler (93, 93', 94, 94' 95, 95') verbunden sind.

3. Signaldecoder nach Anspruch 1 oder 2,
dadurch gekennzeichnet,

daß die Schließungsphase ($t_1$) des ersten Schalters (2) bei 3/8, die Schließungsphase ($t_2$) des zweiten Schalters (5) bei 1/2 und die Schließungsphase ($t_3$) des dritten Schalters (7) bei ≧ 1 der Dauer der Codewörter für die Zustände Null und Eins liegen.

4. Signaldecoder für ein Schnittstellensignal (nach CCITT G.744) nach Anspruch 1,
*dadurch gekennzeichnet,*
daß dreistufige binäre Zähler (93, 93', 94, 94', 95, 95') vorgesehen sind, deren Stufenausgänge mit den Befehlsausgängen (16, 16', 17, 17', 18, 18') der Zähler (9, 9') verbunden sind, und
daß Teiler 32:1 vorgesehen sind, an deren Eingängen der Systemtakt 8448 kHz angeschlossen ist und deren invertierte Ausgänge mit den Takteingängen der internen Zähler verbunden sind.

5. Signaldecoder nach Anspruch 1, 2 oder 3,
*gekennzeichnet durch*
die Vervendung im Datensignaleingang des Pulscodemodulationssystems PCM 30 F.

6. Signaldecoder nach Anspruch 1, 2 oder 3,
*gekennzeichnet, durch*
die Verwendung im Datensignaleingang einer PCM-Vermittlung.

7. Signaldecoder nach Anspruch 1, 2 oder 3,
*gekennzeichnet durch*
die Verwendung im Datensignaleingang eines 64-kbit/s-Endgerätes.

**Claims:**

1. Signal decoder for converting a co-directional 64-kbit/s interface signal, divided into a positive and a negative half-wave and amplified, into a binary information signal, a 64-kHz clock signal and 8kHz clock signal, *characterised in* that for each half-wave a first store (3,3') is provided, whose input is connected via a first switch (2,2') to the input (1, 1') for the half wave, that for each half-wave a second store (6,6') is provided whose input is connected to the output of a second switch (5,5'), whose control input is in turn connected to the output of a controllable inverter (4,4'), whose input is also connected to the input for the halfwave (1, 1') and whose control input is connected to the output of the first store (3,3'), that for each halfwave a third store (8,8') is provided whose input is connected to the output of a third switch (7,7'), whose control input is in turn connected to the input (1, 1') for the half-wave, that for each half-wave a counter (9,9') is provided whose start input is connected to the input (1,1') for the first half-wave, whose stop input is connected to the input (1, 1') for the second half-wave, whose first command output is connected to the control input of the first switch (3,3'), whose second command output is connected to the input of the second switch (6,6'), and whose third command output is connected to the input of the third switch (7,7'), that a first OR-gate (10) is provided whose inputs are each connected to an output of the first stores (3,3') and whose output emits the information signal, that a second OR-gate (11) is provided whose inputs are each connected to an output of the second stores (6,6') and whose output emits the 64-kHz clock signal, and that a third OR-gate (12) is provided whose inputs are each connected to an output of the third stores (8,8') and whose output emits the 8kHz clock signal.

2. A signal decoder for interface signal (in accordance with CCITT G.732) as claimed in claim 1, *characterised in* that three-stage binary, internal counters (93,93',94, 94',95,95') are provided whose stage outputs are connected to the command outputs (16,16',17,17',18,18') of the counters (9,9') and that 8:1 dividers (91,91') are provided to whose inputs the system clock signal 2048kHz is connected and whose inverted outputs are connected to the clock inputs of the internal counters (93,93',94,94',95,95').

3. A signal decoder as claimed in claim 1 or 2, *characterised in* that the closure phase ($t_1$) of the first switch (2) occurs st 3/8, the closure phase ($t_2$) of the second switch (5) occurs st 1/2 and the closure phase ($t_3$) of the third switch (7) occurs at ≧ 1 of the duration of the code words for the zero and one states.

4. A signal decoder for interface signal (in accordance with CCITT G.744) as claimed in claim 1, *characterised in* that 3-stage binary counters (93,93', 94,94',95,95') are provided whose stage outputs are connected to the command outputs (16, 16', 17, 17', 18, 18') of the counters (9,9') and that 32: 1 dividers are provided, at whose inputs the system clock signal 8448kHz is connected and whose inverted outputs are connected to the clock inputs of the internal counters.

5. A signal decoder as claimed in claim 1,2 or 3, *characterised by* its use in the data signal input of the pulse code modulation system PCM 30 F.

6. A signal decoder as claimed in claim 1,2 or 3, *characterised by* its use in the data signal input of a PCH exchange.

7. A signal decoder as claimed in claim 1,2 or 3, *characterised by* its use in the data signal input of a 64-kbit/s terminal.

**Revendications**

1. Décodeur de signaux servant à convertir un signal d'interface à 64 kbits/s codirectionnel, divisé en une alternance positive et en une alternance négative et amplifié, en un signal d'information binaire, en un signal de cadence à 64 kHz et en un signal de cadence à 8 kHz, caractérisé par le fait qu'il est prévu pour chaque alternance une première mémoire (3, 3,), dont l'entrée est reliée par l'intermédiaire d'un premier commutateur (2, 2') à l'entrée (1, 1') pour l'alternance, que pour chaque alternance il est prévu une seconde mémoire (6, 6') dont l'entrée est reliée à la sortie d'un second commutateur (5, 5') dont l'entrée de commande est à nouveau reliée à la sortie d'un inverseur (4, 4') pouvant être commandé et dont l'entrée est reliée en outre à l'entrée pour l'alternance (1, 1,) et dont l'entrée de commande est reliée à la sortie de la première mémoire (3, 3'), que pour chaque alternance il est prévu une troisième mémoire (8, 8'), dont l'entrée est reliée à la sortie d'un troisième commutateur (7, 7') dont l'entrée de commande est reliée á nouveau à l'entrée (1, 1') pour l'alternance, que pour chaque alternance il est prévu un compteur (9, 9') dont l'entrée de démarrage est reliée à l'entrée (1, 1') pour la première alternance et dont l'entrée de blocage est reliée à l'entrée (1, 1') pour la seconde alternance et dont la première sortie d'instructions est reliée à l'entrée de commande du premier commutateur (3, 3'), et dont la seconde sortie d'instructions est reliée à l'entrée du second commutateur (6, 6') et dont la troisième sortie d'instructions est reliée à l'entrée du troisième commutateur (7, 7'), et qu'il est prévu une première porte OU (10) dont les entrées sont reliées à des sorties respectives de la première mémoire (3, 3') et dont la sortie délivre le signal d'information, et qu'il est prévu une seconde porte OU (11), dont les entrées sont reliées à des sorties respectives de la seconde mémoire (6, 6') et dont la sortie délivre le signal de cadence à 64 kHz, et qu'il est prévu une troisième porte OU (12) dont les entrées sont reliées à des sorties respectives de la troisième mémoire (8, 8') et dont la sortie délivre le signal de cadence à 8 kHz.

2. Décodeur de signaux pour un signal d'interface (selon CCITT G.732) suivant la revendication 1, caractérisé par le fait qu'il est prévu des compteurs internes binaires à trois étages (93, 93', 94, 94', 95, 95'), dont les sorties des étages sont reliées aux sorties d'instructions (16, 16', 17, 17', 18, 18') des compteurs (9, 9'), et qu'il est prévu des diviseurs 8:1 (91, 91'), aux entrées desquels le signal de cadence du système à 2048 kHz est appliqué et dont les entrées inverseuses sont reliées aux entrées de cadence des compteurs internes (93, 93', 94, 94', 95, 95').

3. Décodeur de signaux suivant la revendication 1 ou 2, caractérisé par le fait que la phase de fermeture (t₁) du premier commutateur (2), la phase de fermeture (t₂) du second commutateur (5) et la phase de fermeture (t₃) du troisième commutateur (7) sont respectivement égales aux 3/8-èmes, à 1/2 et à une valeur ⩾ 1 de ou à ladurée des mots de code pour les états zéro et un.

4. Décodeur de signaux pour un signal d'interface (selon CCITT G.744) suivant la revendication 1, caractérisé par le fait qu'il est prévu des compteurs binaires à trois étages (93, 93', 94, 94', 95, 95'), dont les sorties des étages sont reliées aux sorties d'instructions (16, 16', 17, 17', 18, 18') des compteurs (9, 9') et qu'il est prévu des diviseurs 32:1, aux entrées desquels est appliqué le signal de cadence du système à 8448 kHz et dont les entrées inverseuses sont reliées aux entrées de cadence des compteurs internes.

5. Décodeur de signaux suivant la revendication 1, 2 ou 3, caractérisé par l'utilisation du système de modulation d'impulsions codées pCM 30 F à l'entrée des signaux de données.

6. Décodeurs de signaux suivant la revendication 1, 2 ou 3, caractérisé par l'utilisation d'un central pCM à l'entrée des-signaux de données.

7. Décodeur de signaux suivant la revendication 1, 2 ou 3, caractérisé par l'utilisation d'un appareil terminal à 64 kbits/s à l'entrée des signaux de données.

# FIG 1

# FIG 2

FIG 3

0 065 596

FIG 4

0 065 596